# EUROPÄISCHE PATENTSCHRIFT

(11) **EP 3 058 652 B1**
(45) Veröffentlichungstag und Bekanntmachung des Hinweises auf die Patenterteilung: **20.02.2019**
(21) Anmeldenummer: 14784076.3
(22) Anmeldetag: 14.10.2014
(51) Int. Cl.: H02P 29/02

(54) **STEUERGERÄT MIT SICHERHEITSABSCHALTUNG**
CONTROL UNIT WITH SAFETY SHUTDOWN
APPAREIL DE COMMANDE À DÉBRANCHEMENT DE SÉCURITÉ

(30) Priorität: 14.10.2013 DE 102013220727
(43) Veröffentlichungstag der Anmeldung: 24.08.2016
(73) Patentinhaber: Schmidhauser AG, 8590 Romanshorn (CH)
(72) Erfinder: ITTEN, Alex, CH-8590 Romanshorn (CH); LÄNG, Bernhard, CH-8590 Romanshorn (CH)
(74) Vertreter: Patentanwälte Ruff, Wilhelm, Beier, Dauster & Partner mbB
(86) Internationale Anmeldenummer: PCT/EP2014/072030
(87) Internationale Veröffentlichungsnummer: WO 2015/055659

(56) Entgegenhaltungen:
- EP-A1- 2 341 609
- DE-A1-102006 003 254
- DE-A1-102010 003 595
- DE-A1-102011 017 712
- DE-A1-102011 081 173
- DE-A1-102012 208 631

## Beschreibung

Die Erfindung betrifft ein Steuergerät, insbesondere in Form eines Frequenzumrichters oder eines Servo-Reglers, für eine elektrische Maschine bzw. einen Elektromotor.

Die DE 10 2011 017 712 A1 zeigt eine Steuereinrichtung zum Ansteuern eines Pulswechselrichters eines elektrischen Antriebssystems mit einer Steuerregelschaltung, einer Fehlerlogikschaltung und einer Schutzschaltung.

Die EP 2 341 609 A1 zeigt ein Steuergerät für einen Elektromotor, das mindestens zwei Notstoppsignale empfängt, um auf diese Weise einen sicheren Zustand einzustellen, bei dem keine Drehmomenterzeugung erfolgen kann.

Die DE 10 2011 081 173 A1 zeigt eine Betriebszustandsschaltung für Wechselrichter und ein Verfahren zum Einstellen von Betriebszuständen eines Wechselrichters.

Die DE 10 2010 003 595 A1 zeigt einen Wechselrichter für eine elektrische Maschine und ein Verfahren zum Betreiben eines Wechselrichters für eine elektrische Maschine.

Die DE 10 2006 003 254 A1 zeigt ein Verfahren zum Abschalten einer elektrischen Maschine im Falle einer Störung.

Die DE 10 2012 208 631 A1 zeigt ein Verfahren und eine Vorrichtung zum Betrieb eines bürstenlosen Motors.

Der Erfindung liegt die Aufgabe zugrunde, ein Steuergerät für einen Elektromotor zur Verfügung zu stellen, welches bei Bedarf einen sicheren drehmomentfreien Zustand eines, insbesondere feldgeschwächten, Elektromotors bewirken kann.

Die Erfindung löst diese Aufgabe durch Steuergerät nach Anspruch 1.

Das erfindungsgemäße Steuergerät, beispielsweise in Form eines Frequenzumrichters, dient zur Ansteuerung einer elektrischen Maschine, insbesondere in Form eines Elektromotors. Bei dem Elektromotor kann es sich beispielsweise um eine herkömmliche Synchronmaschine oder eine Asynchronmaschine handeln.

Das Steuergerät weist eine Motorsteuereinheit auf, die dazu ausgebildet ist, eine Anzahl von Motorsteuersignalen zu erzeugen. Die Anzahl der Motorsteuersignale kann beispielsweise sechs oder mehr als sechs betragen.

Das Steuergerät weist weiter eine von der Motorsteuereinheit unabhängige Sicherheitseinheit auf, die dazu ausgebildet ist, eine Anzahl von Sicherheitssteuersignalen zu erzeugen. Die Anzahl von Sicherheitssteuersignalen kann beispielsweise vier oder mehr als vier betragen. Die Sicherheitseinheit kann dazu ausgebildet sein, einen Betrieb eines Antriebssystems, welches das Steuergerät und den Elektromotor enthält, zu überwachen. Hierzu kann eine geeignete Sensorik vorgesehen sein. Für den Fall, dass die Sicherheitseinheit einen kritischen bzw. fehlerhaften Zustand detektiert, erzeugt die Sicherheitseinheit die Sicherheitssteuersignale derart, dass sich ein möglichst sicherer Zustand, insbesondere ein drehmomentfreier bzw. drehmomentreduzierter Zustand, einstellt, und zwar unabhängig von den durch die Motorsteuereinheit erzeugten Motorsteuersignalen.

Das Steuergerät weist weiter eine Treibereinheit auf, die mit den Motorsteuersignalen und den Sicherheitssteuersignalen beaufschlagt ist und die dazu ausgebildet ist, Leistungshalbleitersteuersignale für zugehörige Leistungshalbleiter einer herkömmlichen Umrichtereinheit zu erzeugen.

Das Steuergerät weist weiter die Umrichtereinheit mit einer Anzahl von Brückenzweigen auf. Die Anzahl kann beispielsweise drei betragen. Die Brückenzweige sind herkömmlich an einem ersten Ende mit einem positiven Zwischenkreispotential beaufschlagt und an einem zweiten Ende mit einem negativen Zwischenkreispotential beaufschlagt. Die Brückenzweige weisen jeweils einen Brückenausgangsanschluss und jeweils zwei oder mehr Leistungshalbleiter auf, die mittels eines zugehörigen Leistungshalbleitersteuersignals der Leistungshalbleitersteuersignale angesteuert sind. Bei den Leistungshalbleitern kann es sich beispielsweise im IGBTs handeln.

Die Treibereinheit ist dazu ausgebildet, unabhängig von einem Zustand der Motorsteuersignale bei einem ersten Zustandsmuster der Sicherheitssteuersignale die Leistungshalbleitersteuersignale derart zu erzeugen, dass sämtliche Leistungshalbleiter einen nicht-leitenden Zustand aufweisen. Mit anderen Worten werden sämtliche Leistungshalbleiter abgeschaltet, so dass sich eine sichere Drehmomentfreischaltung ergibt.

Die Treibereinheit ist weiter dazu ausgebildet, unabhängig von einem Zustand der Motorsteuersignale bei einem zweiten, vom ersten Zustandsmuster verschiedenen Zustandsmuster der Sicherheitssteuersignale die Leistungshalbleitersteuersignale derart zu erzeugen, dass ein jeweiliger Brückenausgangsanschluss sämtlicher Brückenzweige mit dem positiven Zwischenkreispotential elektrisch verbunden ist. Das zweite Zustandsmuster bzw. die zugehörigen Leistungshalbleitersteuersignale können beispielsweise zur sicheren Drehmomentreduzierung bzw. Drehmomentfreischaltung einer feldgeschwächten Maschine im Feldschwächebereich dienen, ohne dass über zugehörige Freilaufdioden der Leistungshalbleiter ein Zwischenkreis auf eine Überspannung aufgeladen wird, so dass beispielsweise eine Beschädigung von mit dem Zwischenkreis gekoppelten Geräten vermieden werden kann. Gleichzeitig ist sichergestellt, dass in diesem Zustand kein unerlaubt großes Drehmoment erzeugt wird.

Die Treibereinheit ist weiter dazu ausgebildet, unabhängig von einem Zustand der Motorsteuersignale bei einem dritten, vom ersten bzw. zweiten Zustandsmuster verschiedenen Zustandsmuster der Sicherheitssteuersignale die Leistungshalbleitersteuersignale derart zu erzeugen, dass ein jeweiliger Brückenausgangsanschluss sämtlicher Brückenzweige mit dem negativen Zwischenkreispotential elektrisch verbunden ist. Dieser Zustand entspricht funktional dem zweiten Zustandsmuster.

Die Treibereinheit kann weiter dazu ausgebildet sein, bei einem vierten Zustandsmuster der Sicherheitssteuersignale die Leistungshalbleitersteuersignale in Abhängigkeit von den Motorsteuersignalen zu erzeugen. Die Leistungshalbleitersteuersignale können hierbei den Motorsteuersignalen entsprechen.

Bei Vorliegen des ersten, zweiten und dritten Zustandsmusters der Sicherheitssteuersignale werden die Leistungshalbleitersteuersignale unabhängig von den Motorsteuersignalen erzeugt, d.h. die Sicherheitssteuersignale bzw. deren Zustandsmuster überschreibt die Motorsteuersignale, so dass beispielsweise mittels eines geeigneten Zustandsmusters der Sicherheitssteuersignale ein drehmomentfreier Zustand erzwungen werden kann, selbst wenn die Motorsteuersignale mittels der Motorsteuereinheit zur Erzeugung eines von Null verschiedenen Drehmoments erzeugt werden. Das vierte Zustandsmuster der Sicherheitssteuersignale kann einem Freigabezustand entsprechen, während dem die Motorsteuersignale das Erzeugen der Leistungshalbleitersteuersignale bestimmen.

Die Brückenzweige können jeweils mehr als zwei Leistungshalbleiter aufweisen, die mittels eines zugehörigen Leistungshalbleitersteuersignals der Leistungshalbleitersteuersignale angesteuert sind. Beispielsweise können vier Leistungshalbleiter pro Brückenzweig vorgesehen sein, denen entsprechend vier Leistungshalbleitersteuersignale zugeordnet sind. Dies ermöglicht einen mehrstufigen Betrieb eines jeweiligen Brückenzweigs.

Das Steuergerät kann eine erste Spannungsversorgungseinheit und eine von der ersten Spannungsversorgungseinheit unabhängige zweite Spannungsversorgungseinheit aufweisen. Die erste Spannungsversorgungseinheit kann dazu ausgebildet sein, die Motorsteuereinheit und/oder die Sicherheitseinheit und/oder die Treibereinheit bzw. jeweilige Bestandteile davon mit einer Betriebsspannung zu versorgen. Die zweite Spannungsversorgungseinheit kann zusätzlich dazu ausgebildet sein, die Motorsteuereinheit und/oder die Sicherheitseinheit und/oder die Treibereinheit oder jeweilige Bestandteile davon mit einer Betriebsspannung zu versorgen, so dass die Betriebsspannungsversorgung aus Sicherheitsgründen redundant ausgelegt ist.

Die Treibereinheit kann eine erste Gruppe von Funktionselementen (Treiber, digitale Logik, analoge Schaltkreise usw.) aufweisen, die dazu ausgebildet sind, Leistungshalbleitersteuersignale für diejenigen Leistungshalbleiter zu erzeugen, die zwischen das positive Zwischenkreispotential und den Brückenausgangsanschluss eingeschleift sind, und eine zweite Gruppe von Funktionselementen aufweisen, die dazu ausgebildet sind, Leistungshalbleitersteuersignale für diejenigen Leistungshalbleiter zu erzeugen, die zwischen das negative Zwischenkreispotential und den Brückenausgangsanschluss eingeschleift sind. Die erste Spannungsversorgungseinheit kann dazu ausgebildet sein, die erste Gruppe und/oder die zweite Gruppe mit einer Betriebsspannung zu versorgen, und die zweite Spannungsversorgungseinheit kann dazu ausgebildet sein, die erste Gruppe und/oder die zweite Gruppe mit einer Betriebsspannung zu versorgen, so dass Betriebsspannungsversorgung aus Sicherheitsgründen redundant ausgelegt ist und auch bei Ausfall einer der Spannungsversorgungen ein sicherer Zustand einstellbar ist.

Das Steuergerät kann eine Umschalteinheit aufweisen, die eingangsseitig mit der ersten und der zweiten Spannungsversorgungseinheit elektrisch verbunden ist und die ausgangsseitig mit der Motorsteuereinheit, der Sicherheitseinheit und der Treibereinheit elektrisch verbunden ist, wobei die Umschalteinheit dazu ausgebildet ist, für den Fall, dass eine der Spannungsversorgungseinheiten defekt ist, die Betriebsspannung der nicht defekten Spannungsversorgungseinheit ausgangsseitig auszugeben und die Motorsteuereinheit, die Sicherheitseinheit und die Treibereinheit bzw. Bestandteile davon mit der ausgegebenen Betriebsspannung zu versorgen.

Das Steuergerät weist Sensormittel auf, beispielsweise in Form von Drehzahlsensoren, Stromsensoren, Spannungssensoren, Temperatursensoren usw., die mit der Sicherheitseinheit gekoppelt sind und die dazu ausgebildet sind, Messgrößen in Form einer Drehzahl des Elektromotors, einer Zwischenkreisspannung, eines oder mehrerer Strommesssignale und/oder eines oder mehrerer Motorsignale zu messen. Die Sensormittel können zusätzlich auch mit der Motorsteuereinheit gekoppelt sein. Die Sicherheitseinheit kann dazu ausgebildet sein, die Zustandsmuster der Sicherheitssteuersignale in Abhängigkeit von den Messgrößen zu erzeugen. Die Sicherheitseinheit kann dazu ausgebildet sein, die Zustandsmuster der Sicherheitssteuersignale zusätzlich oder alternativ in Abhängigkeit von einer Modellrechnung zu erzeugen. Mittels der Modellrechnung kann beispielsweise mittelbar eine Motordrehzahl bestimmt werden.

Die Sicherheitseinheit kann dazu ausgebildet sein, das erste Zustandsmuster der Sicherheitssteuersignale unterhalb einer Schwellendrehzahl zu erzeugen und das zweite oder das dritte Zustandsmuster der Sicherheitssteuersignale oberhalb der Schwellendrehzahl zu erzeugen.

In einem Grunddrehzahlbereich unterhalb der Schwellendrehzahl werden im Bedarfsfall mittels der Sicherheitseinheit die Leistungshalbleiter abgeschaltet. Da ein Spitzenwert einer Motorspannung hierbei typisch unter der Zwischenkreisspannung liegt, baut sich ein Motorstrom ab und die Maschine ist drehmomentfrei.

Oberhalb der Schwellendrehzahl wird stattdessen die untere Gruppe der Leistungshalbleiter (diejenigen Leistungshalbleiter, die zwischen das negative Zwischenkreispotential und den Brückenausgangsanschluss eingeschleift sind) oder die obere Gruppe der Leistungshalbleiter (diejenigen Leistungshalbleiter, die zwischen das positive Zwischenkreispotential und den Brückenausgangsanschluss eingeschleift sind) eingeschaltet und damit der Elektromotor kurzgeschlossen. Feldschwächbare Elektromotoren können so dimensioniert werden, dass sie einen Kurzschlussstrom (Drehmoment) aufweisen, welcher unterhalb des Nennstromes (Nennmomentes) des Elektromotors liegt. Somit stellt dieser Zustand keine Überlastung der Leistungshalbleiter dar.

Weiter besteht die Möglichkeit, die untere und obere Gruppe der Leistungshalbleiter abwechselnd einzuschalten, wobei bevorzugt eine Umschaltfrequenz tief gehalten wird, um entsprechende Schaltverluste klein zu halten.

Weiter ist es möglich, beim Versagen eines dieser beiden Abschaltpfade die jeweils andere Gruppe von Leistungshalbleitern einzuschalten. Das Versagen (Open Circuit) kann z.B. am Ansteigen der Zwischenkreisspannung erkannt werden.

Die Sicherheitseinheit kann dazu ausgebildet sein, in Abhängigkeit von den Messgrößen zu ermitteln, ob einer oder mehrere derjenigen Leistungshalbleiter, die den Brückenausgangsanschluss mit dem positiven oder negativen Zwischenkreispotential elektrisch verbinden, defekt sind, beispielsweise nicht einschaltbar (leitend) sind oder nicht ausschaltbar (nicht leitend) sind. Hierzu können beispielsweise Stromsensoren an geeigneter Stelle im Brückenzweig vorgesehen sein, die es der Sicherheitseinheit ermöglichen, einen tatsächlichen Strom mit einem gemäß Schaltzustand der Leistungshalbleiter zu erwartenden Strom zu vergleichen.

Die Sicherheitseinheit kann dazu ausgebildet sein, in Abhängigkeit von den Messgrößen zu ermitteln, ob einer oder mehrere derjenigen Leistungshalbleiter, die den Brückenausgangsanschluss mit dem positiven Zwischenkreispotential elektrisch verbinden, nicht einschaltbar (leitend) sind, wobei für diesen Fall das erste oder das dritte Zustandsmuster der Sicherheitssteuersignale erzeugt wird.

Die Sicherheitseinheit kann weiter dazu ausgebildet sein, in Abhängigkeit von den Messgrößen zu ermitteln, ob einer oder mehrere derjenigen Leistungshalbleiter, die den Brückenausgangsanschluss mit dem positiven Zwischenkreispotential elektrisch verbinden, nicht ausschaltbar (nicht leitend) sind, wobei für diesen Fall das erste oder das zweite Zustandsmuster der Sicherheitssteuersignale erzeugt wird.

Die Sicherheitseinheit kann weiter dazu ausgebildet sein, in Abhängigkeit von den Messgrößen zu ermitteln, ob einer oder mehrere derjenigen Leistungshalbleiter, die den Brückenausgangsanschluss mit dem negativen Zwischenkreispotential elektrisch verbinden, nicht einschaltbar sind, wobei für diesen Fall das erste oder das zweite Zustandsmuster der Sicherheitssteuersignale erzeugt wird.

Die Sicherheitseinheit kann weiter dazu ausgebildet sein, in Abhängigkeit von den Messgrößen zu ermitteln, ob einer oder mehrere derjenigen Leistungshalbleiter, die den Brückenausgangsanschluss mit dem negativen Zwischenkreispotential elektrisch verbinden, nicht ausschaltbar sind, wobei für diesen Fall das erste oder das dritte Zustandsmuster der Sicherheitssteuersignale erzeugt wird.

Die Sicherheitseinheit kann dazu ausgebildet sein, in Abhängigkeit von den Messgrößen zu ermitteln, ob innerhalb eines oder mehrerer Brückenzweige ein Kurzschluss vorliegt, wobei für diesen Fall ein zugehöriges Zustandsmuster der Sicherheitssteuersignale erzeugt wird.

Die Sicherheitseinheit kann dazu ausgebildet sein, insbesondere ausgehend von dem ersten Zustandsmuster der Sicherheitssteuersignale, das zweite oder dritte Zustandsmuster der Sicherheitssteuersignale zu erzeugen, wenn die Zwischenkreisspannung einen Schwellenwert überschreitet, um auf diese Weise ein weiteres Ansteigen der Zwischenkreisspannung zu verhindern.

Die Sicherheitseinheit kann dazu ausgebildet sein, für den Fall, dass die Sicherheitssteuersignale mit dem zweiten oder dritten Zustandsmuster erzeugt sind, ein von dem zweiten oder dritten Zustandsmuster verschiedenes Zustandsmuster zu erzeugen, wenn eine Messgröße in Form eines Motorstroms einen Schwellenwert überschreitet, um den Motorstrom zu reduzieren.

Die Erfindung wird nachfolgend unter Bezugnahme auf die Zeichnung detailliert beschrieben. Hierbei zeigt schematisch:

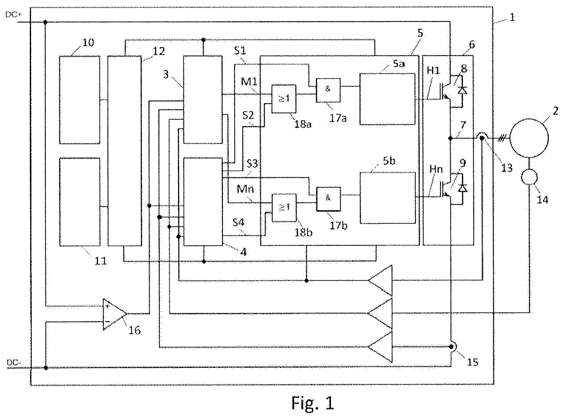

Fig. 1 ein Blockschaltbild eines erfindungsgemäßen Steuergeräts.

Fig. 1 zeigt ein Steuergerät 1 in Form eines Frequenzumrichters, das zur Ansteuerung eines herkömmlichen Elektromotors bzw. einer herkömmlichen Elektromaschine 2 dient.

Das Steuergerät 1 weist eine Motorsteuereinheit 3 auf, die binäre Motorsteuersignale M1 bis Mn (exemplarisch sind lediglich zwei Motorsteuersignale dargestellt) erzeugt. Weiter ist eine Sicherheitseinheit 4 vorgesehen, die binäre Sicherheitssteuersignale S1 bis S4 erzeugt.

Eine Treibereinheit 5 empfängt die Motorsteuersignale M1 bis Mn und die Sicherheitssteuersignale S1 bis S4 und erzeugt in Abhängigkeit von diesen Signalen Leistungshalbleitersteuersignale H1 bis Hn (exemplarisch sind lediglich zwei Leistungshalbleitersteuersignale dargestellt). Hierzu weist die die Treibereinheit 5 Oder-Gatter 18a und 18b, Und-Gatter 17a und 17b und Gate-Treiber 5a und 5b auf. Die mit "a" indizierten Elemente 5a, 17a, 18a bilden eine erste Gruppe von Funktionselementen, die dazu ausgebildet sind, Leistungshalbleitersteuersignale H1 für diejenigen Leistungshalbleiter 8 zu erzeugen, die zwischen das positive Zwischenkreispotential DC+ und den Brückenausgangsanschluss 7 eingeschleift sind. Die mit "b" indizierten Elemente 5b, 17b, 18b bilden eine zweite Gruppe von Funktionselementen, die dazu ausgebildet sind, Leistungshalbleitersteuersignale H2 für diejenigen Leistungshalbleiter 9 zu erzeugen, die zwischen das negative Zwischenkreispotential DC- und den Brückenausgangsanschluss 7 eingeschleift sind.

Eine Umrichtereinheit 6 des Steuergeräts 1 weist eine Anzahl von Brückenzweigen auf. In Fig. 1 ist exemplarisch ein einzelner Brückenzweig mit Leistungshalbleitern 8 und 9 in Form von IGBTs mit jeweils zugehörigen Freilaufdioden dargestellt, die mittels eines zugehörigen der Leistungshalbleitersteuersignale H1 bzw. Hn angesteuert sind. Es können weitere, insbesondere zwei weitere, Brückenzweige vorgesehen sein, die entsprechend aufgebaut und angesteuert sind. Bevorzugt ist pro Phase bzw. Strang des Elektromotors 2 genau ein Brückenzweig vorgesehen, so dass für einen dreiphasigen Elektromotor drei Brückenzweige vorgesehen sind.

Die Brückenzweige bzw. der dargestellte Brückenzweig sind/ist an einem ersten Ende mit einem positiven Zwischenkreispotential DC+ beaufschlagt und an einem zweiten Ende mit einem negativen Zwischenkreispotential DC- beaufschlagt.

Die Brückenzweige bzw. der dargestellte Brückenzweig weisen/weist jeweils einen Brückenausgangsanschluss 7 auf, der mit einer zugehörigen Motorphase des Elektromotors 2 gekoppelt ist.

Solange die Sicherheitssteuersignale S1 bis S4 ein erstes binäres Zustandsmuster "0X0X" aufweisen (X entspricht dont' care), erzeugt die Treibereinheit 5 die Leistungshalbleitersteuersignale H1 bis Hn derart, dass sämtliche Leistungshalbleiter 8, 9 einen nicht-leitenden Zustand aufweisen. Entsprechendes gilt für gegebenenfalls vorhandene weitere Brückenzweige. Das erste binäre Zustandsmuster wird üblicherweise unterhalb einer Schwellendrehzahl des Elektromotors 2 erzeugt, falls beispielsweise eine Sicherheitsabschaltung erforderlich ist. Das erste Zustandsmuster wird nachfolgend auch als STO-Zustand bezeichnet.

Solange die Sicherheitssteuersignale S1 bis S4 ein zweites binäres Zustandsmuster "110X" aufweisen, erzeugt die Treibereinheit 5 die Leistungshalbleitersteuersignale H1 bis Hn derart, dass ausschließlich der Leistungshalbleiter 8 leitend ist und damit der Brückenausgangsanschluss 7 mit dem positiven Zwischenkreispotential DC+ elektrisch verbunden ist. Entsprechendes gilt für gegebenenfalls vorhandene weitere Brückenzweige.

Solange die Sicherheitssteuersignale S1 bis S4 ein drittes binäres Zustandsmuster "0X11" aufweisen, erzeugt die Treibereinheit 5 die Leistungshalbleitersteuersignale H1 bis Hn derart, dass ausschließlich der Leistungshalbleiter 9 leitend ist und damit der Brückenausgangsanschluss 7 mit dem negativen Zwischenkreispotential DC- elektrisch verbunden ist. Entsprechendes gilt für gegebenenfalls vorhandene weitere Brückenzweige.

Das zweite und dritte binäre Zustandsmuster werden üblicherweise oberhalb einer Schwellendrehzahl des Elektromotors 2 erzeugt, falls beispielsweise die Sicherheitsabschaltung erforderlich ist. Das zweite und dritte Zustandsmuster werden nachfolgend auch als oberer bzw. unterer SSC-Zustand bezeichnet.

Solange die ersten Sicherheitssteuersignale S1 bis S4 ein viertes binäres Zustandsmuster "1010" aufweisen, erzeugt die Treibereinheit 5 die Leistungshalbleitersteuersignale H1 bis Hn derart, dass die Leistungshalbleitersteuersignale H1 bis Hn den Motorsteuersignalen M1 bis Mn entsprechen. Entsprechendes gilt für gegebenenfalls vorhandene weitere Brückenzweige. Das vierte binäre Zustandsmuster wird üblicherweise dann erzeugt, wenn keine Sicherheitsabschaltung erforderlich ist, so dass die Motorsteuereinheit 4 den Betreib des Elektromotors 2 steuert.

Das Steuergerät 1 weist eine erste Spannungsversorgungseinheit 10 und eine von der ersten Spannungsversorgungseinheit 10 unabhängige zweite Spannungsversorgungseinheit 11 auf.

Das Steuergerät 1 weist weiter eine Umschalteinheit 12 auf, die eingangsseitig mit der ersten und der zweiten Spannungsversorgungseinheit 10, 11 elektrisch verbunden ist und die ausgangsseitig mit der Motorsteuereinheit 3, der Sicherheitseinheit 4 und der Treibereinheit 5 elektrisch verbunden ist. Die Umschalteinheit 12 ist dazu vorgesehen, für den Fall, dass eine der Spannungsversorgungseinheiten 10, 11 defekt ist, die Betriebsspannung der nicht defekten Spannungsversorgungseinheit ausgangsseitig auszugeben und die Motorsteuereinheit 3, die Sicherheitseinheit 4 und die Treibereinheit 5 mit der ausgegebenen Betriebsspannung zu versorgen.

Das Steuergerät weist Sensormittel 13, 14, 15, 16 auf, die mit der Motorsteuereinheit 3 und der Sicherheitseinheit 4 gekoppelt sind und die dazu ausgebildet sind, Messgrößen in Form einer Drehzahl des Elektromotors, einer Zwischenkreisspannung, eines oder mehrerer Strommesssignale und/oder eines oder mehrerer Motorsignale zu messen. Optional kann auch die Treibereinheit 5 mit den Messgrößen oder einem Teil der Messgrößen beaufschlagt sein, wobei für diesen Fall die Treibereinheit 5 dazu ausgebildet sein kann, die Leistungshalbleitersteuersignale H1 bis Hn auch in Abhängigkeit von den Messgrößen zu erzeugen.

Mittels des Stromsensors 15 kann beispielsweise erfasst werden, ob ein Leistungshalbleiter 8, 9 nicht ausschaltbar ist und/oder ob ein Motorstrom einen Schwellenwert überschreitet.

Die Motorsteuereinheit 3 und die Sicherheitseinheit 4 sind jeweils dazu ausgebildet, die Motorsteuersignale M1 bis Mn bzw. das Zustandsmuster der Sicherheitssteuersignale S1 bis S4 in Abhängigkeit von den Messgrößen zu erzeugen.

Die Erfindung ermöglicht die kostengünstige und sichere Drehmomentfreischaltung einer feldgeschwächten elektrischen Maschine 2.

In einem Grunddrehzahlbereich werden mittels des ersten Zustandsmusters sämtliche Leistungshalbleiter 9, 9 der Brückenzweige abgeschaltet. Da der Spitzenwert der Motorspannung unter der Zwischenkreisspannung liegt, baut sich der Motorstrom ab und die elektrische Maschine 2 ist drehmomentfrei.

Im Feldschwächebereich hingegen erfolgt eine Sicherheitsabschaltung mittels des zweiten oder dritten Zustandsmusters, wodurch die untere oder die obere Gruppe der Leistungshalbleiter 8 bzw. 9 eingeschaltet und damit die E-Maschine 2 kurzgeschlossen wird, ohne dass über die Freilaufdioden der Zwischenkreis aufgeladen wird und durch eine Überspannung das Steuergerät 1 oder angeschlossene Geräte zerstört werden und ohne dass in diesem Zustand ein unerlaubt großes Drehmoment erzeugt wird.

Es besteht die Möglichkeit, die untere und obere Leistungshalbleitergruppe 8 bzw. 9 abwechselnd zu schalten, wobei die Schaltfrequenz tief gehalten wird um die Schaltverluste klein zu halten.

Ebenso ist es möglich, beim Versagen eines dieser beiden Abschaltpfade die jeweils andere Gruppe von Leistungshalbleitern einzuschalten. Das Versagen (Open Circuit) kann z.B. am Ansteigen der Zwischenkreisspannung erkannt werden.

Aufgrund der zur Verfügung stehenden leistungsfähigen Hardware (beispielsweise schnelle DSPs oder programmierbare Logik) für die Motorsteuereinheit 3 und die Sicherheitseinheit 4 kann eine sehr hohe Regelbandbreite (Stromregler mit 8kHz z.B.) erzielt werden, wodurch das Steuergerät 1 in der Lage ist, auch dann die richtige Sicherheitsabschaltmaßnahme bzw. Zustandsmuster einzustellen, wenn die Drehzahl an der elektrischen Maschine 2 sehr rasch geändert wird (blockiertes Rad, z.B. durch ABS).

Die Sicherheitseinheit 4 und/oder die Treibereinheit 5 kann/können derart ausgebildet sein, dass die Sicherheitseinheit 4 und/oder die Treibereinheit 5 die Leistungshalbleiter 8, 9 derart vor Überlast schützt/schützen, dass diese selbst, ohne eingreifen der Motorsteuereinheit 3 das Abschalten oder das Kurzschließen der E-Maschine 2 auch unter Überlastbedingungen übernehmen können.

Es kann vorgesehen sein, dass die Sicherheitseinheit 4 und/oder die Treibereinheit 5 bei aktivem zweiten oder dritten Zustandsmuster (SSC-Zustand) bei einem zu großen resultierenden Motorstrom die Leistungshalbleiter 8, 9 nicht dauerhaft abschaltet/abschalten und somit den SSC-Zustand beendet/beenden, sondern nur für eine verbleibende PWM-Periode (also beispielsweise max. 250µs) eines herkömmlichen PWM-Ansteuerverfahrens. Es kann vor einem Wiedereinschalten geprüft werden, ob dies zulässig ist.

Vor dem Wiedereinschalten kann geprüft werden, welche der beiden Halbleitergruppen 8, 9 die SSC-Funktion übernehmen kann, falls z.B. eine der beiden Speisungen ausgefallen ist oder ein Defekt an der anderen Halbleitergruppe erkannt wurde (z.B. durch Spannungsanstieg im Zwischenkreis).

Aufgrund der redundanten Spannungsversorgung mit zwei Quellen 10 und 11 (beispielsweise 12V bzw. 24V Bordnetz und Zwischenkreis), kann selbst beim Ausfall einer der beiden Quellen 10 bzw. 11 immer der sichere Zustand STO oder SSC eingestellt und damit die E-Maschine 2 drehmomentfrei geschaltet werden, selbst bei einem Ausfall der Sensorik.

Das Bestimmen des einzustellenden sicheren Zustandes STO oder SSC kann beispielsweise durch Auswerten von Resolver-Signalen, Auswerten von Stromsignalen und der daraus bestimmbaren Statorfrequenz (Drehzahl für Synchronmaschinen), Auswerten der Zwischenkreisspannung (Umschalten von STO auf SSC, falls diese über einen bestimmten Wert ansteigt oder eine zu hohe Anstiegsgeschwindigkeit aufweist) und/oder durch Messung der Motorspannung erfolgen.

Die Motordrehzahl muss für die richtige Wahl des sicheren Zustandes STO oder SSC nicht exakt ermittelt werden. Dadurch, dass der Zwischenkreisspannungsbereich in der Regel weit spezifiziert ist, muss kein exakter Umschaltpunkt erkannt werden. Sobald die Drehzahl unter die Grenze der maximalen Zwischenkreisspannung gefallen ist, und damit die Freilaufdioden nicht mehr leiten, ist STO die sichere Maßnahme, weil damit das Drehmoment unabhängig von der Drehzahl auf Null gestellt werden kann.

Bei Verwendung der Erfindung in Kraftfahrzeugen kann aufgrund der zuletzt gespeicherten Messgrößen eine Entscheidung über den sicheren Zustand erfolgen, da die Änderung der Geschwindigkeit eines Fahrzeuges in der Regel nur sehr langsam erfolgt. Wird der STO-Zustand gewählt, so ist dieser gültig bis zum Erreichen der Drehzahl 0, also dem Stillstand des Fahrzeuges. Wird der SSC-Zustand gewählt, so kann dieser Zustand beibehalten werden, auch wenn das Drehmoment kurz vor Erreichen der Drehzahl 0 ansteigt und das Fahrzeug dann bei einer gefahrlosen kleinen Geschwindigkeit rasch abbremst.

Durch das Messen des Motorstromes (Berechnung der Frequenz oder durch das Messen des Abstandes der Nulldurchgänge) oder über einen Drehzahlsensor ist es ebenfalls möglich, ab Unterschreiten einer vorgegebenen Drehzahl auf den sicheren Zustand STO umzuschalten.

Ein Umschalten von STO auf SSC zur Sicherstellung des sicheren Zustandes könnte im einfachsten Fall ausschließlich auf der Auswertung eines Grenzwertes der Zwischenkreisspannung basieren, welche unabhängig von einer potentiell ausgefallenen, anderen Versorgungsspannungen ausgeführt wird.

Sowohl die Motorsteuereinheit 3 als auch die Sicherheitseinheit 4 sind jeweils selbstständig dazu in der Lage, den sicheren Zustand STO bzw. SSC einzuschalten. Dennoch unterscheiden sich die beiden Einheiten dahingehend, dass die Motorsteuereinheit 3 alle Schaltzustände, also auch gewünschte Fahrzustände wie das Beschleunigen, einstellen kann, während die Sicherheitseinheit 4 ausschließlich einen sicheren Zustand STO, oberer SSC und unterer SSC einstellen kann.

Durch geeignete Programmierung der Sicherheitseinheit 4 und/oder durch zusätzliche Hardwareverknüpfungen kann sichergestellt werden, dass die Sicherheitseinheit 4 nur die 3 sicheren Zustände STO, oberer SSC und unterer SSC einstellen kann. Die Sicherheitseinheit 4 verfügt über die Priorität in der Ansteuerung der Leistungshalbleiter 8, 9 und kann damit einen drehmomenterzeugenden Zustand der Motorsteuereinheit 3 durch einen sicheren Zustand überschreiben - nicht aber umgekehrt. ---------------

## Patentansprüche

1. Steuergerät (1), insbesondere in Form eines Frequenzumrichters oder eines Servo-Reglers, für einen Elektromotor (2), aufweisend:
- eine Motorsteuereinheit (3), die dazu ausgebildet ist, Motorsteuersignale (M1 bis Mn) zu erzeugen,
- eine Sicherheitseinheit (4), die dazu ausgebildet ist, Sicherheitssteuersignale (S1 bis S4) zu erzeugen,
- eine Treibereinheit (5), die mit den Motorsteuersignalen (M1 bis Mn) und den Sicherheitssteuersignalen (S1 bis S4) beaufschlagt ist und die dazu ausgebildet ist, Leistungshalbleitersteuersignale (H1 bis Hn) zu erzeugen,
- eine Umrichtereinheit (6) mit einer Anzahl von Brückenzweigen, wobei die Brückenzweige an einem ersten Ende mit einem positiven Zwischenkreispotential (DC+) beaufschlagt sind, an einem zweiten Ende mit einem negativen Zwischenkreispotential (DC-) beaufschlagt sind, einen Brückenausgangsanschluss (7) aufweisen und jeweils mindestens zwei Leistungshalbleiter (8, 9) aufweisen, die mittels eines zugehörigen der Leistungshalbleitersteuersignale (H1 bis Hn) angesteuert sind,
- eine erste Spannungsversorgungseinheit (10),
- eine von der ersten Spannungsversorgungseinheit (10) unabhängige zweite Spannungsversorgungseinheit (11),
- eine Umschalteinheit (12), die eingangsseitig mit der ersten und der zweiten Spannungsversorgungseinheit (10, 11) elektrisch verbunden ist und die ausgangsseitig mit der Motorsteuereinheit (3), der Sicherheitseinheit (4) und der Treibereinheit (5) elektrisch verbunden ist, wobei die Umschalteinheit dazu ausgebildet ist, für den Fall, dass eine der Spannungsversorgungseinheiten (10, 11) defekt ist, die Betriebsspannung der nicht defekten Spannungsversorgungseinheit ausgangsseitig auszugeben und die Motorsteuereinheit (3), die Sicherheitseinheit (4) und die Treibereinheit (5) mit der ausgegebenen Betriebsspannung zu versorgen,
- wobei die Treibereinheit (5) dazu ausgebildet ist, unabhängig von einem Zustand der Motorsteuersignale (M1 bis Mn) bei einem ersten Zustandsmuster der Sicherheitssteuersignale (S1 bis S4) die Leistungshalbleitersteuersignale (H1 bis Hn) derart zu erzeugen, dass sämtliche Leistungshalbleiter (8, 9) einen nicht-leitenden Zustand aufweisen, bei einem zweiten Zustandsmuster der Sicherheitssteuersignale (S1 bis S4) die Leistungshalbleitersteuersignale (H1 bis Hn) derart zu erzeugen, dass der Brückenausgangsanschluss (7) mit dem positiven Zwischenkreispotential (DC+) elektrisch verbunden ist, und bei einem dritten Zustandsmuster der Sicherheitssteuersignale (S1 bis S4) die Leistungshalbleitersteuersignale (H1 bis Hn) derart zu erzeugen, dass der Brückenausgangsanschluss (7) mit dem negativen Zwischenkreispotential (DC-) elektrisch verbunden ist, und
- Sensormittel (13, 14, 15, 16), die mit der Sicherheitseinheit (4) gekoppelt sind und die dazu ausgebildet sind, Messgrößen in Form einer Drehzahl des Elektromotors (2), einer Zwischenkreisspannung, eines oder mehrerer Strommesssignale und/oder eines oder mehrerer Motorsignale zu messen,
- wobei die Sicherheitseinheit (4) dazu ausgebildet ist, die Zustandsmuster der Sicherheitssteuersignale (S1 bis S4) in Abhängigkeit von den Messgrößen zu erzeugen.

2. Steuergerät (1) nach Anspruch 1, **dadurch gekennzeichnet, dass** die Treibereinheit (5) dazu ausgebildet ist, bei einem vierten Zustandsmuster der Sicherheitssteuersignale (S1 bis S4) die Leistungshalbleitersteuersignale (H1 bis Hn) in Abhängigkeit von den Motorsteuersignalen (M1 bis Mn) zu erzeugen.

3. Steuergerät (1) nach Anspruch 1 oder 2, **dadurch gekennzeichnet, dass** die Brückenzweige jeweils mehr als zwei Leistungshalbleiter aufweisen, die mittels eines zugehörigen der Leistungshalbleitersteuersignale (H1 bis Hn) angesteuert sind.

4. Steuergerät (1) nach einem der vorhergehenden Ansprüche, **dadurch gekennzeichnet, dass**
- die Treibereinheit (5) eine erste Gruppe (5a, 17a, 18a) von Funktionselementen umfasst, die dazu ausgebildet sind, Leistungshalbleitersteuersignale (H1) für diejenigen Leistungshalbleiter (8) zu erzeugen, die zwischen das positive Zwischenkreispotential (DC+) und den Brückenausgangsanschluss (7) eingeschleift sind, und
- die Treibereinheit (5) eine zweite Gruppe (5b, 17b, 18b) von Funktionselementen umfasst, die dazu ausgebildet sind, Leistungshalbleitersteuersignale (Hn) für diejenigen Leistungshalbleiter (9) zu erzeugen, die zwischen das negative Zwischenkreispotential (DC-) und den Brückenausgangsanschluss (7) eingeschleift sind,
- wobei die erste Spannungsversorgungseinheit (10) dazu ausgebildet ist, die erste Gruppe (5a, 17a, 18a) und/oder die zweite Gruppe (5b, 17b, 18b) mit einer Betriebsspannung zu versorgen, und
- wobei die zweite Spannungsversorgungseinheit (11) dazu ausgebildet ist, die erste Gruppe (5a, 17a, 18a) und/oder die zweite Gruppe (5b, 17b, 18b) mit einer Betriebsspannung zu versorgen.

5. Steuergerät (1) nach einem der vorhergehenden Ansprüche, **dadurch gekennzeichnet, dass**
- die Sicherheitseinheit (4) dazu ausgebildet ist, das erste Zustandsmuster der Sicherheitssteuersignale (S1 bis S4) unterhalb einer Schwellendrehzahl zu erzeugen und das zweite oder das dritte Zustandsmuster der Sicherheitssteuersignale (S1 bis S4) oberhalb der Schwellendrehzahl zu erzeugen.

6. Steuergerät (1) nach einem der vorhergehenden Ansprüche, **dadurch gekennzeichnet, dass**
- die Sicherheitseinheit (4) dazu ausgebildet ist, in Abhängigkeit von den Messgrößen zu ermitteln, ob einer oder mehrere derjenigen Leistungshalbleiter, die den Brückenausgangsanschluss (7) mit dem positiven Zwischenkreispotential (DC+) elektrisch verbinden, nicht einschaltbar sind, wobei für diesen Fall das erste oder das dritte Zustandsmuster der Sicherheitssteuersignale (S1 bis S4) erzeugt wird, und/oder
- die Sicherheitseinheit (4) dazu ausgebildet ist, in Abhängigkeit von den Messgrößen zu ermitteln, ob einer oder mehrere derjenigen Leistungshalbleiter, die den Brückenausgangsanschluss (7) mit dem positiven Zwischenkreispotential (DC+) elektrisch verbinden, nicht ausschaltbar sind, wobei für diesen Fall das erste oder das zweite Zustandsmuster der Sicherheitssteuersignale (S1 bis S4) erzeugt wird, und/oder
- die Sicherheitseinheit (4) dazu ausgebildet ist, in Abhängigkeit von den Messgrößen zu ermitteln, ob einer oder mehrere derjenigen Leistungshalbleiter, die den Brückenausgangsanschluss (7) mit dem negativen Zwischenkreispotential (DC-) elektrisch verbinden, nicht einschaltbar sind, wobei für diesen Fall das erste oder das zweite Zustandsmuster der Sicherheitssteuersignale (S1 bis S4) erzeugt wird, und/oder
- die Sicherheitseinheit (4) dazu ausgebildet ist, in Abhängigkeit von den Messgrößen zu ermitteln, ob einer oder mehrere derjenigen Leistungshalbleiter, die den Brückenausgangsanschluss (7) mit dem negativen Zwischenkreispotential (DC-) elektrisch verbinden, nicht ausschaltbar sind, wobei für diesen Fall das erste oder das dritte Zustandsmuster der Sicherheitssteuersignale (S1 bis S4) erzeugt wird.

7. Steuergerät (1) nach einem der vorhergehenden Ansprüche, **dadurch gekennzeichnet, dass**
- die Sicherheitseinheit (4) dazu ausgebildet ist, in Abhängigkeit von den Messgrößen zu ermitteln, ob innerhalb eines oder mehrerer Brückenzweige ein Kurzschluss vorliegt, wobei für diesen Fall das erste, zweite oder dritte Zustandsmuster der Sicherheitssteuersignale (S1 bis S4) erzeugt wird.

8. Steuergerät (1) nach einem der vorhergehenden Ansprüche, **dadurch gekennzeichnet, dass**
- die Sicherheitseinheit (4) dazu ausgebildet ist, insbesondere ausgehend von dem ersten Zustandsmuster der Sicherheitssteuersignale (S1 bis S4), das zweite oder dritte Zustandsmuster der Sicherheitssteuersignale (S1 bis S4) zu erzeugen, wenn die Zwischenkreisspannung einen Schwellenwert überschreitet.

9. Steuergerät (1) nach einem der vorhergehenden Ansprüche, **dadurch gekennzeichnet, dass**
- die Sicherheitseinheit (4) dazu ausgebildet ist, für den Fall, dass die Sicherheitssteuersignale (S1 bis S4) mit dem zweiten oder dritten Zustandsmuster erzeugt sind, ein von dem zweiten oder dritten Zustandsmuster verschiedenes Zustandsmuster zu erzeugen, wenn eine Messgröße in Form eines Motorstroms einen Schwellenwert überschreitet.

## Claims

1. Control device (1), in particular in the form of a frequency converter or a servo-controller, for an electric motor (2), comprising:
- a motor control unit (3) which is configured to generate motor control signals (M1 to Mn),
- a safety unit (4) which is configured to generate safety control signals (S1 to S4),
- a driver unit (5) which is supplied with the motor control signals (M1 to Mn) and the safety control signals (S1 to S4) and which is configured to generate power semiconductor control signals (H1 to Hn),
- an inverter unit (6) having a number of bridge branches, wherein the bridge branches are supplied with a positive intermediate circuit potential (DC+) at a first end and with a negative intermediate circuit potential (DC-) at a second end, comprise a bridge output terminal (7) and each have at least two power semiconductors (8, 9) which are actuated by means of an associated one of the power semiconductor control signals (H1 to Hn),
- a first voltage supply unit (10),
- a second voltage supply unit (11) which is independent of the first voltage supply unit (10),
- a switching unit (12) which is electrically connected on the input side to the first and second voltage supply units (10, 11) and which is electrically connected on the output side to the motor control unit (3), the safety unit (4) and the driver unit (5), wherein the switching unit is configured, in the event of one of the voltage supply units (10, 11) being defective, to output the operating voltage of the non-defective voltage supply unit on the output side and to supply the motor control unit (3), the safety unit (4) and the driver unit (5) with the operating voltage which is output,
- wherein the driver unit (5) is configured to generate, irrespective of a state of the motor control signals (M1 to Mn), in the case of a first state pattern of the safety control signals (S1 to S4), the power semiconductor control signals (H1 to Hn) in such a way that all the power semiconductors (8, 9) have a non-conductive state, in the case of a second state pattern of the safety control signals (S1 to S4), to generate the power semiconductor control signals (H1 to Hn) in such a way that the bridge output terminal (7) is electrically connected to the positive intermediate circuit potential (DC+), and in the case of a third state pattern of the safety control signals (S1 to S4), to generate the power semiconductor control signals (H1 to Hn) in such a way that the bridge output terminal (7) is electrically connected to the negative intermediate circuit potential (DC-), and
- sensor means (13, 14, 15, 16) which are coupled to the safety unit (4) and which are configured to measure measurement variables in the form of a rotational speed of the electric motor (2), an intermediate circuit voltage, one or more current measurement signals and/or one or more motor signals,
- wherein the safety unit (4) is configured to generate the state patterns of the safety control signals (S1 to S4) as a function of the measurement variables.

2. Control device (1) according to claim 1, **characterized in that** the driver unit (5) is configured to generate, in the case of a fourth state pattern of the safety control signals (S1 to S4), the power semiconductor control signals (H1 to Hn) as a function of the motor control signals (M1 to Mn).

3. Control device (1) according to claim 1 or 2, **characterized in that** the bridge branches each have more than two power semiconductors which are actuated by means of an associated one of the power semiconductor control signals (H1 to Hn).

4. Control device (1) according to any of the preceding claims, **characterized in that**
- the driver unit (5) comprises a first group (5a, 17a, 18a) of functional elements which are designed to generate power semiconductor control signals (H1) for those power semiconductors (8) which are connected between the positive intermediate circuit potential (DC+) and the bridge output terminal (7), and
- the driver unit (5) comprises a second group (5b, 17b, 18b) of functional elements which are designed to generate power semiconductor control signals (Hn) for those power semiconductors (9) which are connected between the negative intermediate circuit potential (DC-) and the bridge output terminal (7),
- wherein the first voltage supply unit (10) is designed to supply the first group (5a, 17a, 18a) and/or the second group (5b, 17b, 18b) with an operating voltage, and
- wherein the second voltage supply unit (11) is designed to supply the first group (5a, 17a, 18a) and/or the second group (5b, 17b, 18b) with an operating voltage.

5. Control device (1) according to any of the preceding claims, **characterized in that**
- the safety unit (4) is configured to generate the first state pattern of the safety control signals (S1 to S4) below a threshold rotational speed, and to generate the second or the third state pattern of the safety control signals (S1 to S4) above the threshold rotational speed.

6. Control device (1) according to any of the preceding claims, **characterized in that**
- the safety unit (4) is configured to determine, as a function of the measurement variables, whether one or more of those power semiconductors which electrically connect the bridge output terminal (7) to the positive intermediate circuit potential (DC+) cannot be switched on, wherein if this is the case the first or the third state pattern of the safety control signals (S1 to S4) is generated, and/or
- the safety unit (4) is configured to determine, as a function of the measurement variables, whether one or more of those power semiconductors which electrically connect the bridge output terminal (7) to the positive intermediate circuit potential (DC+) cannot be switched off, wherein if this is the case the first or the second state pattern of the safety control signals (S1 to S4) is generated, and/or
- the safety unit (4) is configured to determine, as a function of the measurement variables, whether one or more of those power semiconductors which electrically connect the bridge output terminal (7) to the negative intermediate circuit potential (DC-) cannot be switched on, wherein if this is the case the first or the second state pattern of the safety control signals (S1 to S4) is generated, and/or
- the safety unit (4) is configured to determine, as a function of the measurement variables, whether one or more of those power semiconductors which electrically connect the bridge output terminal (7) to the negative intermediate circuit potential (DC-) cannot be switched off, wherein if this is the case the first or the third state pattern of the safety control signals (S1 to S4) is generated.

7. Control device (1) according to any of the preceding claims, **characterized in that**
- the safety unit (4) is configured to determine, as a function of the measurement variables, whether a short circuit is present within one or more bridge branches, wherein if this is the case the first, second or third state pattern of the safety control signals (S1 to S4) is generated.

8. Control device (1) according to any of the preceding claims, **characterized in that**
- the safety unit (4) is configured to generate, in particular on the basis of the first state pattern of the safety control signals (S1 to S4), the second or third state pattern of the safety control signals (S1 to S4) if the intermediate circuit voltage exceeds a threshold value.

9. Control device (1) according to any of the preceding claims, **characterized in that**
- the safety unit (4) is configured, in the case of the safety control signals (S1 to S4) being generated with the second or third state pattern, to generate a state pattern which is different from the second or third state pattern if a measurement variable in the form of a motor current exceeds a threshold value.

## Revendications

1. Appareil de commande (1), en particulier sous la forme d'un convertisseur de fréquence ou d'un servorégulateur, destiné à un moteur électrique (2), comportant :
- une unité de commande de moteur (3) qui est conçue pour générer des signaux de commande de moteur (M1 à Mn),
- une unité de sécurité (4) qui est conçue pour générer des signaux de commande de sécurité (S1 à S4),
- une unité d'attaque (5) qui est alimentée avec les signaux de commande de moteur (M1 à Mn) et les signaux de commande de sécurité (S1 à S4) et qui est conçue pour générer des signaux de commande de semi-conducteurs de puissance (H1 à Hn),
- une unité de conversion (6) comportant un certain nombre de branches de pont, dans lequel les branches de pont sont attaquées à une première extrémité par un potentiel de circuit intermédiaire positif (DC+), à une deuxième extrémité par un potentiel de circuit intermédiaire négatif (DC-), comportent une borne de sortie de pont (7) et comportent respectivement au moins deux semi-conducteurs de puissance (8, 9) qui sont commandés au moyen de l'un, correspondant, des signaux de commande de semi-conducteurs de puissance (H1 à Hn),
- une première unité d'alimentation en tension (10),
- une deuxième unité d'alimentation en tension (11) indépendante de la première unité d'alimentation en tension (10),
- une unité de commutation (12) qui est électriquement reliée côté entrée à la première et à la deuxième unité d'alimentation en tension (10, 11) et qui est électriquement reliée côté sortie à l'unité de commande de moteur (3), à l'unité de sécurité (4) et à l'unité d'attaque (5), dans lequel l'unité de commutation est conçue, dans le cas où l'une des unités d'alimentation (10, 11) est défectueuse, pour délivrer en sortie la tension de fonctionnement de l'unité d'alimentation non défectueuse et pour alimenter l'unité de commande de moteur (3), l'unité de sécurité (4) et le circuit de commande (5) avec la tension de fonctionnement délivrée,
- dans lequel l'unité d'attaque (5) est conçue, indépendamment d'un état des signaux de commande de moteur (M1 à Mn), pour une première configuration d'états des signaux de commande de sécurité (S1 à S4), pour générer les signaux de commande de semi-conducteurs de puissance (H1 à Hn) de manière à ce que tous les semi-conducteurs de puissance (8, 9) présentent un état non conducteur, pour une deuxième configuration d'états des signaux de commande de sécurité (S1 à S4), pour générer les signaux de commande de semi-conducteurs de puissance (H1 à Hn) de manière à ce que la borne de sortie de pont (7) soit électriquement reliée au potentiel de circuit intermédiaire positif (DC+) et, pour une troisième configuration d'états des signaux de commande de sécurité (S1 à S4), pour générer les signaux de commande de semi-conducteurs de puissance (H1 à Hn) de manière à ce que la borne de sortie de pont (7) soit électriquement reliée au potentiel de circuit intermédiaire négatif (DC-), et
- des moyens capteurs (13, 14, 15, 16) qui sont couplés à l'unité de sécurité (4) et qui sont conçus pour mesurer des grandeurs de mesure sous la forme d'une vitesse de rotation du moteur électrique (2), d'une tension de circuit intermédiaire, d'un ou de plusieurs signaux de mesure de courant et/ou d'un ou de plusieurs signaux de moteur,
- dans lequel l'unité de sécurité (4) est conçue pour générer les configurations d'états des signaux de commande de sécurité (S1 à S4) en fonction des grandeurs de mesure.

2. Appareil de commande (1) selon la revendication 1, **caractérisé en ce que** l'unité d'attaque (5) est conçue, pour une quatrième configuration d'états des signaux de commande de sécurité (S1 à S4), pour générer les signaux de commande de semi-conducteurs de puissance (H1 à Hn) en fonction des signaux de commande de moteur (M1 à Mn).

3. Appareil de commande (1) selon la revendication 1 ou 2, **caractérisé en ce que** les branches du pont comportent chacune plus de deux semi-conducteurs de puissance qui sont commandés au moyen de l'un, correspondant, des signaux de commande de semi-conducteurs de puissance (H1 à Hn).

4. Appareil de commande (1) selon l'une des revendications précédentes, **caractérisé en ce que**
- l'unité d'attaque (5) comprend un premier groupe (5a, 17a, 18a) d'éléments fonctionnels qui sont conçus pour générer des signaux de commande de semi-conducteurs de puissance (H1) destinés à ceux des semi-conducteurs de puissance (8) qui sont insérés entre le potentiel de circuit intermédiaire positif (DC+) et la borne de sortie de pont (7), et
- l'unité d'attaque (5) comprend un deuxième groupe (5b, 17b, 18b) d'éléments fonctionnels qui sont conçus pour générer des signaux de commande de semi-conducteurs de puissance (Hn) destinés à ceux des semi-conducteurs de puissance (9) qui sont insérés entre le potentiel de circuit intermédiaire négatif (DC-) et la borne de sortie de pont (7),
- dans lequel la première unité d'alimentation en tension (10) est conçue pour alimenter le premier groupe (5a, 17a, 18a) et/ou le deuxième groupe (5b, 17b, 18b) avec une tension de fonctionnement, et
- dans lequel la deuxième unité d'alimentation en tension (11) est conçue pour alimenter le premier groupe (5a, 17a, 18a) et/ou le deuxième groupe (5b, 17b, 18b) avec une tension de fonctionnement.

5. Appareil de commande (1) selon l'une des revendications précédentes, **caractérisé en ce que** - l'unité de sécurité (4) est conçue pour générer la première configuration d'états des signaux de commande de sécurité (S1 à S4) en-dessous d'une certaine vitesse de rotation seuil et pour générer la deuxième ou la troisième configuration d'états des signaux de commande de sécurité (S1 à S4) au-dessus de ladite vitesse de rotation de seuil.

6. Appareil de commande (1) selon l'une des revendications précédentes, **caractérisé en ce que**
- l'unité de sécurité (4) est conçue pour déterminer, en fonction des grandeurs de mesure, si un ou plusieurs des semi-conducteurs de puissance qui relient électriquement la borne de sortie de pont (7) au potentiel de circuit intermédiaire positif (DC+) ne peuvent pas être activés, auquel cas la première ou la troisième configuration d'états des signaux de commande de sécurité (S1 à S4) est générée, et/ou
- l'unité de sécurité (4) est conçue pour déterminer, en fonction des grandeurs de mesure, si un ou plusieurs des semi-conducteurs de puissance qui relient électriquement la borne de sortie de pont (7) au potentiel de circuit intermédiaire positif (DC+) ne peuvent pas être désactivés, auquel cas la première ou la deuxième configuration d'états des signaux de commande de sécurité (S1 à S4) est générée, et/ou
- l'unité de sécurité (4) est conçue pour déterminer, en fonction des grandeurs de mesure, si un ou plusieurs des semi-conducteurs de puissance qui relient électriquement la borne de sortie de pont (7) au potentiel de circuit intermédiaire négatif (DC-) ne peuvent pas être activés, auquel cas la première ou la deuxième configuration d'états des signaux de commande de sécurité (S1 à S4) est générée, et/ou
- l'unité de sécurité (4) est conçue pour déterminer, en fonction des grandeurs de mesure, si un ou plusieurs des semi-conducteurs de puissance qui relient électriquement la borne de sortie de pont (7) au potentiel de circuit intermédiaire négatif (DC-) ne peuvent pas être désactivés, auquel cas la première ou la troisième configuration d'états des signaux de commande de sécurité (S1 à S4) est générée.

7. Appareil de commande (1) selon l'une des revendications précédentes, **caractérisé en ce que**
- l'unité de sécurité (4) est conçue pour déterminer, en fonction des grandeurs de mesure, si un court-circuit est présent dans une ou plusieurs branches de pont, auquel cas les première, deuxième ou troisième configurations d'états des signaux de commande de sécurité (S1 à S4) sont générées.

8. Appareil de commande (1) selon l'une des revendications précédentes, **caractérisé en ce que**
- l'unité de sécurité (4) est conçue pour générer la deuxième ou la troisième configuration d'états des signaux de commande de sécurité (S1 à S4), en particulier à partir de la première configuration d'états des signaux de commande de sécurité (S1 à S4), lorsque la tension de circuit intermédiaire dépasse une valeur de seuil.

9. Appareil de commande (1) selon l'une des revendications précédentes, **caractérisé en ce que**
- l'unité de sécurité (4) est conçue, dans le cas où les signaux de commande de sécurité (S1 à S4) sont générés avec la deuxième ou la troisième configuration d'état, pour générer une configuration d'états différente de la deuxième ou de la troisième configuration d'états lorsqu'une grandeur de mesure sous forme de courant de moteur dépasse une valeur de seuil.
